# EUROPEAN PATENT APPLICATION

(11) **EP 3 839 872 A1**
(43) Date of publication of application: **23.06.2021**
(21) Application number: 19850505.9
(22) Date of filing: 15.08.2019
(51) Int. Cl.: G06Q 50/34

(54) **INFORMATION PROCESSING DEVICE, BET ACCEPTANCE METHOD, AND PROGRAM**

(30) Priority: 17.08.2018 JP 2018153653
(71) Applicant: Mixi, Inc., Tokyo 150-6136 (JP)
(72) Inventor: MASUI, Kazufumi, Tokyo 150-6136 (JP); ISHII, Koji, Tokyo 150-6136 (JP); TANIGUCHI, Nozomi, Tokyo 150-6136 (JP); KITAMURA, Ryo, Tokyo 150-6136 (JP)
(74) Representative: Würmser, Julian
(86) International application number: PCT/JP2019/032031
(87) International publication number: WO 2020/036210

(57) **Abstract**

An information processing apparatus 20 includes: a transmission section 21 that transmits screen information for displaying a predetermined screen to a terminal 10; and a reception section 21 that receives information inputted by a first user from the terminal 10, and executes a bet of the first user based on the received information, wherein the screen information includes information related to one or more second users who already placed a bet, and the reception section 21 receives information for identifying at least one second user selected by the first user, or at least part of bet information of the selected at least one second user, and executes the bet of the first user based on the received information.

## Description

### Cross-Reference to Related Application

The present application is based upon Japanese Patent Application No. 2018-153653, filed on August 17, 2018, the disclosure of which is incorporated herein by reference.

### Technical Field

The present invention relates to an information processing apparatus, a bet acceptance method, and a program.

### Background Art

For example, in various events on which betting is conducted, such as horse racing, bicycle racing, and motorboat racing, a bet apparatus that accepts bets from bettors is used (for example, see Patent Literature 1). A bettor can place a bet by describing bet-related matters required for a bet on a betting ticket and inputting the betting ticket into the bet apparatus. For example, in a case of horse racing, matters such as a race track where a race takes place, a betting type such as "win" or "place", and a horse on which a bet is placed are described on a betting ticket, which is then inputted into the bet apparatus, whereby a bet can be placed.

### Citation List

### Patent Literature

Patent Literature 1: Japanese Patent Laid-Open No. 2013-114487

### Summary of Invention

However, a betting method is complicated in some cases, depending on an event. For example, in a case of horse racing, the betting method is complicated because there are many betting types from which one is to be selected and many horses that can be a subject of a bet, and hence many bet patterns. Accordingly, it has been difficult for a bettor less experienced in betting to determine on which bet pattern the bettor had better place a bet, so that such bettors are hindered from easily placing a bet.

Accordingly, an object of the present invention is to provide an information processing apparatus, a bet acceptance method, and a program that enable even a bettor less experienced in betting to easily place a bet.

An information processing apparatus according to an aspect of the present invention includes: a transmission section that transmits screen information for displaying a predetermined screen to a terminal; and a reception section that receives information inputted by a first user from the terminal, and executes a bet of the first user based on the received information, wherein the screen information includes information related to one or more second users who already placed a bet, and the reception section receives information for identifying at least one second user selected by the first user, or at least part of bet information of the selected at least one second user, and executes the bet of the first user based on the received information.

### Advantageous Effect of Invention

According to the present invention, an information processing apparatus, a bet acceptance method, and a program can be provided that enable even a user less experienced in betting to easily place a bet.

### Brief Description of Drawings

[Figure 1] Figure 1 shows a bet system according to an embodiment of the present invention.
[Figure 2] Figure 2 shows an example of a hardware configuration of terminals and a server.
[Figure 3] Figure 3 shows an example of a functional block configuration of the terminals.
[Figure 4] Figure 4 shows an example of a functional block configuration of the server.
[Figure 5] Figure 5 shows an example of a bet information table.
[Figure 6] Figure 6 shows an example of a bet subject information table.
[Figure 7] Figure 7 shows an example of a user information table.
[Figure 8] Figure 8 is a sequence chart showing an example of a processing procedure performed in the bet system.
[Figure 9A] Figure 9A shows an example of a bet screen and a user selection screen displayed on a terminal.
[Figure 9B] Figure 9B shows an example of the bet screen and the user selection screen displayed on the terminal.
[Figure 9C] Figure 9C shows an example of the bet screen and the user selection screen displayed on the terminal.

### Description of Embodiment

An embodiment of the present invention will be described with reference to the accompanying drawings. Note that components denoted by the same reference signs across the drawings have the same or similar configurations.

### (System configuration)

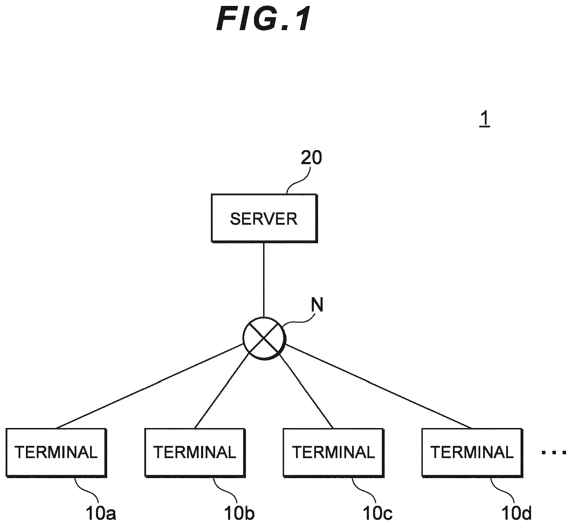

Figure 1 shows an example of a system configuration of a bet system 1 according to an embodiment of the present invention. The bet system 1 shown in Figure 1 is, for example, a system that manages a bet placed by a user on an event on which betting is conducted, such as horse racing.

Although a description will be given of a case, as an example, where the bet system 1 is used in horse racing in the present embodiment, regardless of the horse racing, the bet system 1 may be used in various events on which betting is conducted, such as bicycle racing, motorboat racing, and motorcycle racing. The bet system 1 in the present embodiment may be used in various events in which placings are determined. The bet system 1 may be used in simulation games or the like of the various events mentioned above.

The bet system 1 includes a terminal 10a, a terminal 10b, a terminal 10c, a terminal 10d, and a server 20.
The terminal 10a, the terminal 10b, the terminal 10c, the terminal 10d, and the server 20 are communicably connected to each other through a communication network N such as the Internet or a wireless LAN. In the present embodiment, users using the terminal 10a, the terminal 10b, the terminal 10c, and the terminal 10d are assumed to be a user A, a user B, a user C, and a user D, respectively. When the terminal 10a, the terminal 10b, the terminal 10c, and the terminal 10d need not be discriminated from each other, each of the terminal 10a, the terminal 10b, the terminal 10c, and the terminal 10d is represented as a terminal 10. Note that the number of terminals 10 included in the bet system 1 is not limited to four, and one or more terminals 10 may be included. In the present embodiment, the terminals 10 and the server 20 may be collectively referred to as information processing apparatuses, or only the terminals 10 may be referred to as information processing apparatuses, or only the server 20 may be referred to as an information processing apparatus.

For the terminals 10, any terminals may be used, including, for example, a smartphone, a tablet terminal, a mobile telephone, a personal computer (PC), a laptop PC, a mobile information terminal (PDA: Personal Digital Assistant), a home game console, and the like. The server 20 may be configured by using a single device, or by using a plurality of devices, or may be a server implemented on the cloud.

An outline of the bet system 1 will be described by using Figure 1. First, the user A operates the terminal 10a and accesses the server 20. After accessing the server 20, the user A inputs information for user identification (user ID: identification or the like) into the terminal 10a. The inputted information is transmitted to the server 20 through the communication network N. The server 20 identifies the user who uses the bet system 1, based on the received information.

Thereafter, the server 20 generates screen information including information for displaying a bet screen, and transmits the screen information to the terminal 10a. The terminal 10a displays the bet screen, based on the screen information. The user A places a bet by using the bet screen displayed on the terminal 10a. The bet screen is a screen for a user to place a bet. In a case of horse racing, options for a betting type, such as "win", "place", and "exacta", and for a horse to become a subject of a bet (for example, a horse predicted to come in the first place when the betting type is "win") are displayed in the bet screen, and the user A can select a betting type and a horse as a subject of a bet by using the bet screen. The "betting type" includes, but is not limited to, information for determining whether predetermined finishing places or the like of the one or more subjects of a bet are specified in random order, or are explicitly specified.

When accepting a bet of the user A, the bet system 1 performs processing for assisting the user A in placing the bet. For example, when the user A is a user with less betting records, a simple betting type in which the number of horses to be selected is small, such as "win" or "place", may be preferentially displayed in the bet screen. A betting type selected by the user B and information on a horse on which a bet is placed by the user B may be displayed on the terminal 10a of the user A, to allow the user A to refer to such information when the user A places a bet.

When the user A finishes placing the bet, inputted bet information is transmitted from the terminal 10a to the server 20 through the communication network N. Thereafter, the server 20 determines, based on an actual result of the race, whether or not the bet of the user A is won and the like, and transmits a result of the determination to the terminal 10a.

### (Hardware configuration)

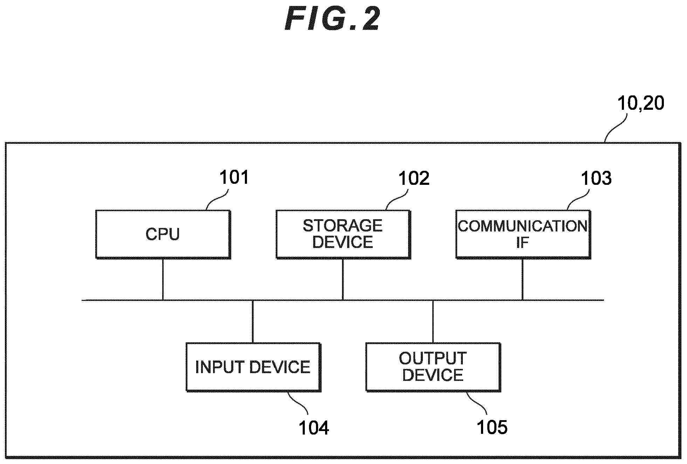

Figure 2 shows an example of a hardware configuration of the terminals 10 and the server 20. The terminals 10 and the server 20 each include a CPU (Central Processing Unit) 101, which is an example of a processor, a storage device 102, a communication IF (Interface) 103, an input device 104, and an output device 105. These components are each connected to one another in such a manner that data can be transmitted and received.

The CPU 101 is a control section that performs control related to execution of a program stored in the storage device 102, and performs computation and processing of data. The CPU 101 receives data from the communication IF 103, and outputs to the output device 105, or stores in the storage device 102, a result of computation of the data.

The storage device 102 is a device that stores various information. The storage device 102 is a volatile storage medium on which data can be rewritten, or a non-volatile storage medium from which data can only be read.

The communication IF 103 is a device that connects the terminal 10 or the server 20 to the communication network N. It is also conceivable that the communication IF 103 is provided outside of the terminal 10 or the server 20. In such a case, the communication IF 103 is connected to the terminal 10 or the server 20, for example, via an interface such as a USB (Universal Serial Bus) .

The input device 104 is a device for receiving input of information from a user. Examples of the input device 104 include a touch panel, a button, a keyboard, a mouse, a microphone, and the like.

The output device 105 is a device for outputting information. Examples of the output device 105 include a liquid crystal display, an organic EL (Electronic Luminescent) display, a speaker, and the like.

### (Functional block configuration)

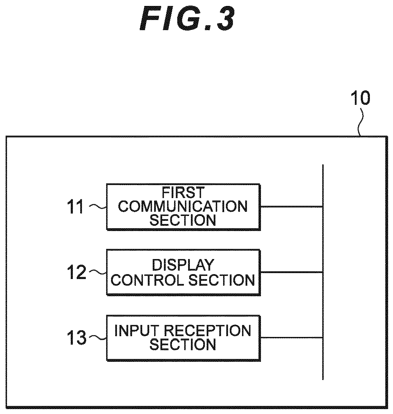

Figure 3 shows an example of a functional block configuration of the terminals 10. The terminals 10 each include a first communication section 11, a display control section 12, and an input reception section 13. The first communication section 11, the display control section 12, and the input reception section 13 can be implemented by the CPU 101 of the terminal 10 executing a program stored in the storage device 102. The program may be a program (application) that can be downloaded from the server 20 and installed in the terminal 10. The program can be stored in a storage medium. The storage medium storing the program may be a non-transitory computer-readable medium. The non-transitory storage medium is not particularly limited, but, for example, may be a storage medium such as a USB memory or a CD-ROM (Compact Disc Read Only Memory).

The first communication section 11 has a function of transmitting and receiving various information including bet information to/from the server 20 via the communication IF 103. Here, the bet information is information related to a bet placed by the user. For example, in a case of horse racing, the bet information includes a betting type such as "win", "place", or "exacta", a horse that is a subject of a bet, a bet amount, and the like.

The first communication section 11 receives screen information from the server 20 via the communication IF 103. The screen information is information for displaying a bet screen. The screen information is generated by a generation section 22 included in the server 20.

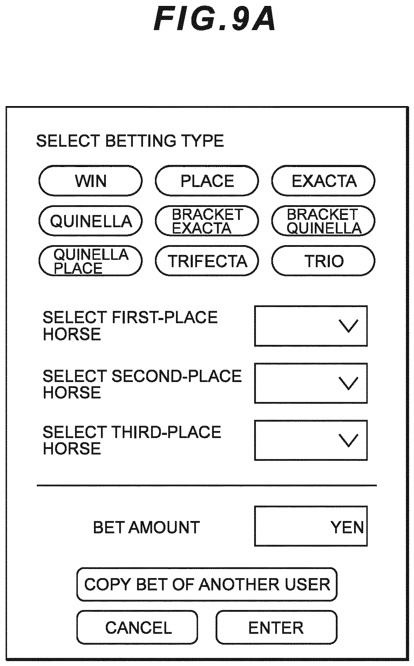

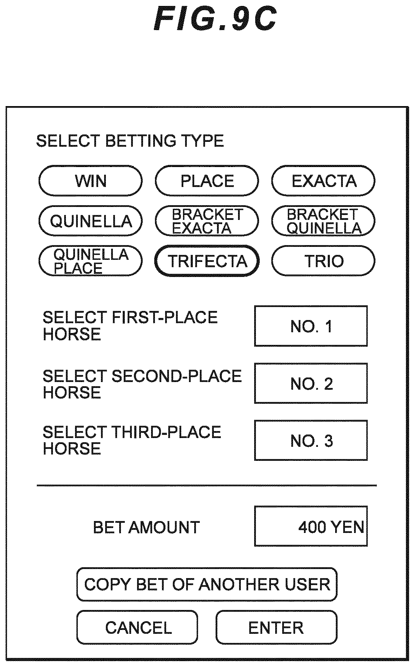

The display control section 12 displays various screens including a bet screen on the output device 105 such as a liquid crystal display, based on information received from the server 20. For example, the display control section 12 causes the output device 105 to display bet screens as shown in Figures 9A and 9C, based on screen information received from the server 20. The display control section 12 and the input reception section 13 may be function sections that are implemented by a web browser included in the terminal 10.

The input reception section 13 has a function of receiving input of various information including bet information from the user via the input device 104 such as a touch panel, a mouse, or a keyboard.

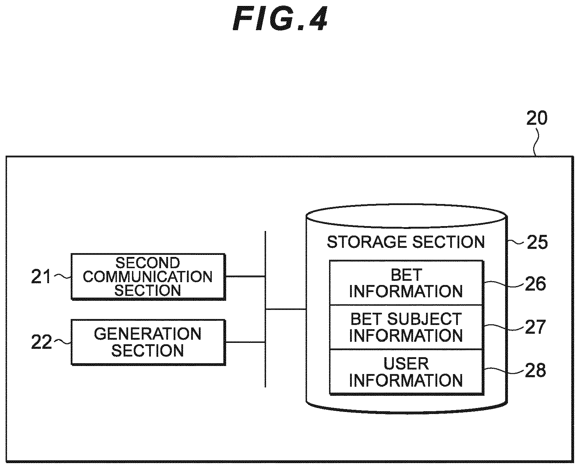

Figure 4 shows an example of a functional block configuration of the server 20. The server 20 includes a second communication section 21, the generation section 22, and a storage section 25. The storage section 25 can be implemented by using an external storage device with which the storage device 102 or the server 20 can communicate. The second communication section 21 and the generation section 22 can be implemented by the CPU 101 of the server 20 executing a program stored in the storage device 102. The program can be stored in a storage medium. The storage medium storing the program may be a non-transitory computer-readable medium. The non-transitory storage medium is not particularly limited, but, for example, may be a storage medium such as a USB memory or a CD-ROM.

The second communication section 21 has a function of transmitting and receiving various information including bet information to/from each terminal 10 via the communication IF 103. For example, when the user A places a bet by copying bet information of a user who already placed a bet, the second communication section 21 may receive, from the terminal 10a, information for identifying the user who is selected by the user A to copy the bet information, or at least part of the bet information of the selected user.

The generation section 22 generates screen information. The screen information is information for displaying a bet screen. For example, in a case of horse racing, the screen information includes information such as options for a betting type such as "win" and "place" and for a horse number.

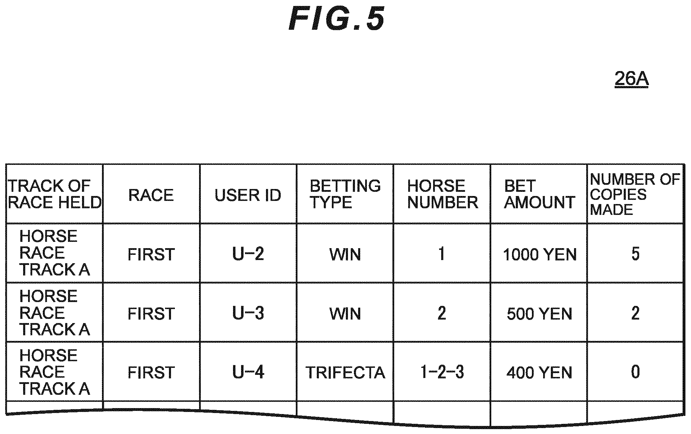

The storage section 25 stores various information for a user to place a bet. Specifically, the storage section 25 stores bet information 26, bet subject information 27, and user information 28. Each information will be described by using Figures 5 to 7.

Figure 5 shows an example of a bet information table 26A that manages the bet information 26. In Figure 5, there are columns of "track of race held", "race", "betting user name", "betting type", "horse number", "bet amount", and "number of copies made", and corresponding information is managed by columns. Regardless of the above-mentioned information, the bet information table 26A may include arbitrary information.

In the column of "track of race held", a name of a horse race track, or information with which the horse race track can be identified, is managed. Names of horse race tracks are managed, whereby it can be identified a race at which horse race track the bet information included in each record is about. In the present example, each managed bet information is information about a race held at a "horse race track A".

In the column of "race", a race number, or information with which a race can be identified, is managed. There are some cases where a plurality of races are held in a day at the same horse race track. Race numbers are managed, whereby it can be identified which race the bet information included in each record is about. In the present example, each managed bet information is information about a "first race".

In the column of "user ID", a user ID of a user who placed a bet is managed. A user ID is an identifier associated with each user. With a user ID, a user can be identified. In the present example, for user IDs, identifiers "U-2", "U-3", and "U-4" are managed.

In the column of "betting type", a betting type of a bet placed by a user, or information with which the betting type can be identified, is managed. In the present example, betting types of bets placed by the user of user ID "U-2" and the user of "U-3" are both "win", and a betting type of a bet placed by the user of user ID "U-4" is "trifecta".

In the column of "horse number", a horse number that identifies a bet-subject horse is managed. In the present example, the user of user ID "U-2" places a bet on a horse of "No. 1", the user of user ID "U-3" places a bet on a horse of "No. 2", and the user of user ID "U-4" places a bet on horses of "No. 1", "No. 2", "No. 3". The number of horses on which a bet is placed changes depending on a betting type.

In the column of "bet amount", an amount of money bet by a user is managed. In the present example, a bet amount of the user of user ID "U-2" is "1000 yen", a bet amount of the user of user ID "U-3" is "500 yen", and a bet amount of the user of user ID "U-4" is "400 yen".

In the column of "number of copies made", the number of times the bet information is copied by another user is managed. In the present embodiment, a user intending to place a bet can copy at least part of bet information of a user who already placed a bet, and can place a bet based on the copied bet information. In the present example, the bet information of the user of user ID "U-2" is copied "5 times", the bet information of the user of user ID "U-3" is copied "2 times", and the bet information of the user of user ID "U-4" is not copied.

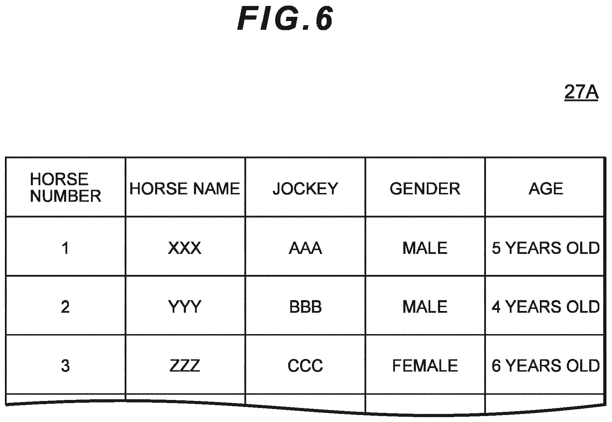

Figure 6 shows an example of a bet subject information table 27A that manages the bet subject information 27. In Figure 6, there are columns of "horse number", "horse name", "jockey", "gender", and "age", and corresponding information is managed by columns. Regardless of the above-mentioned information, the bet subject information table 27A may manage arbitrary information.

In the column of "horse number", a number assigned to each horse running for a race is managed. In the present example, horse numbers managed are "No. 1", "No. 2", and "No. 3".

In the column of "horse name", a name of each horse running for the race, or information with which the horse can be identified, is managed. In the present example, a name of the horse of horse number "No. 1" is "XXX", a name of the horse of horse number "No. 2" is "YYY", and a name of the horse of horse number "No. 3" is "ZZZ".

In the column of "jockey", a name of a jockey riding on a horse is managed. In the present example, a name of a jockey riding on the horse of horse number "No. 1" is "AAA", a name of a jockey riding on the horse of horse number "No. 2" is "BBB", and a name of a jockey riding on the horse of horse number "No. 3" is "CCC".

In the column of "gender", a gender of a horse is managed. In the present example, the horses of horse number "No. 1" and "No. 2" are "male horses", and the horse of horse number "No. 3" is a "female horse".

In the column of "age", an age of a horse is managed. In the present example, an age of the horse of horse number "No. 1" is "5 years old", an age of the horse of horse number "No. 2" is "4 years old", and an age of the horse of horse number "No. 3" is "6 years old".

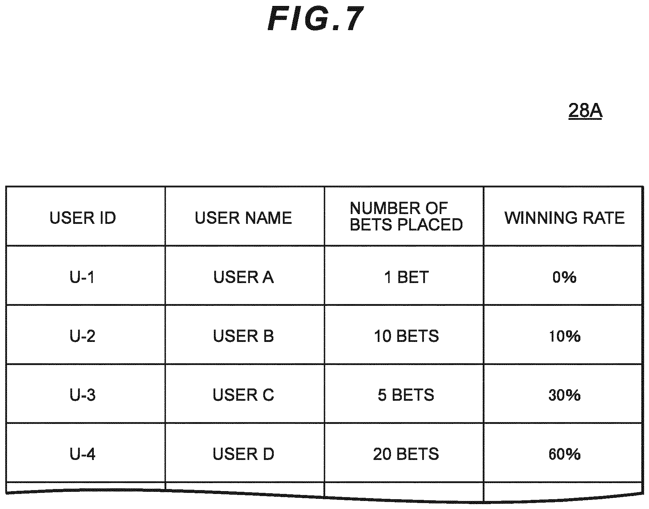

Figure 7 shows an example of a user information table 28A that manages the user information 28. The user information 28 is information related to a user who uses the bet system 1. In Figure 7, there are columns of "user ID", "user name", "number of bets placed", and "winning rate", and corresponding information is managed by columns. Regardless of the above-mentioned information, the user information table 28A may include arbitrary information.

In the column of "user ID", an identifier of a user who uses the bet system 1 is managed. In the present example, identifiers "U-1", "U-2", "U-3", and "U-4" are managed.

In the column of "user name", a name of a user who uses the bet system 1 is managed. In the present example, names of the users of user ID "U-1", "U-2", "U-3", and "U-4" are "user A", "user B", "user C", and "user D", respectively.

In the column of "number of bets placed", the number of bets placed by a user in the past is managed. In the present example, the user of user ID "U-1" placed "1 bet", the user of user ID "U-2" placed "10 bets", the user of user ID "U-3" placed "5 bets", and the user of user ID "U-4" placed "20 bets".

In the column of "winning rate", a rate at which a user won bets in the past is managed. In the present example, a winning rate of the user of user ID "U-1" is "0%", a winning rate of the user of user ID "U-2" is "10%", a winning rate of the user of user ID "U-3" is "30%", and a winning rate of the user of user ID "U-4" is "60%".

### (Processing procedure)

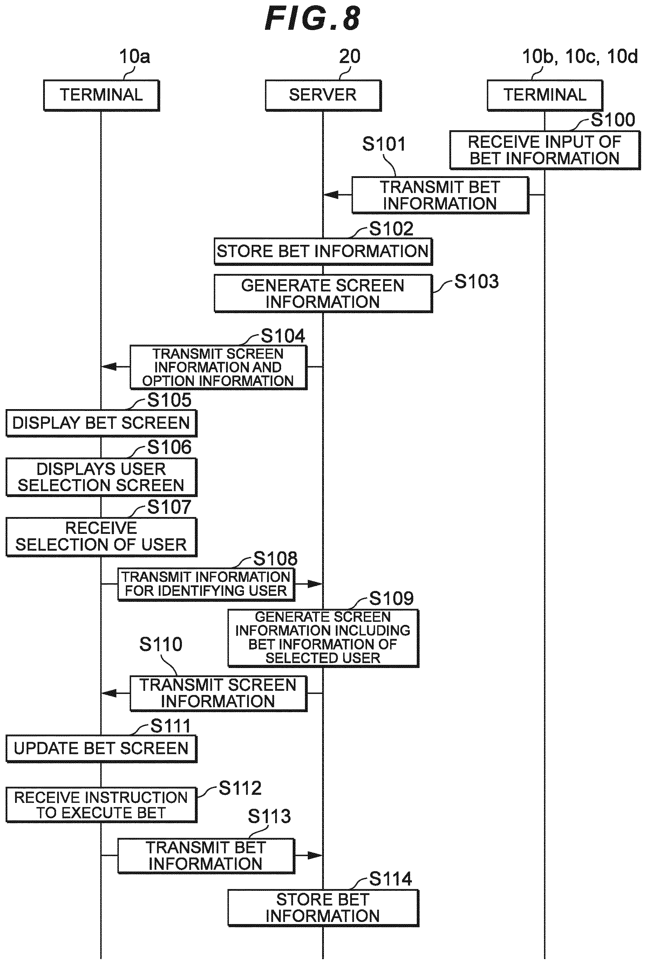

Figure 8 is a sequence chart showing an example of processing performed in the bet system 1. A procedure of the processing in the bet system 1 will be described by using Figure 8. In the present example, a description will be given of a case, as an example, where the user A places a bet via the terminal 10a.

First, the terminal 10b, the terminal 10c, and the terminal 10d receive input of bet information from the user B, the user C, and the user D, respectively (step S100), and transmit the bet information to the server 20 (step S101). Note that the transmission of the bet information by the terminal 10b, the terminal 10c, and the terminal 10d need not be performed at the same time, and may be made from the individual terminals at different times. Not all of the terminal 10b, the terminal 10c, and the terminal 10d need to transmit the bet information.

The server 20 receives the bet information and stores the received bet information in the storage section 25 (step S102). Specifically, corresponding records in the bet information table 26A shown in Figure 5 may be updated.

Subsequently, when the server 20 receives a request related to display of a bet screen from the terminal 10a, the server 20 generates screen information for displaying the bet screen (step S103). The screen information may include options for a betting type and for a subject of a bet.

The server 20 transmits the screen information and option information to the terminal 10a (step S104). In the bet system 1 according to the present embodiment, the betting user A can place a bet by copying at least part of bet information related to a bet placed by another user, without the user A him/herself inputting bet information. Specifically, when the user A intends to place a bet after the user B already placed a bet, the user A can place a bet with the same betting type and the same subject of the bet as those of the user B, by copying the betting type and the subject of the bet of the user B, without inputting bet information him/herself. Although a description is given of a case where only the betting type and the subject of the bet in the bet information are copied in the present example, an item in the bet information that is copied is not limited. For example, a copy may be made with a bet amount included. In an event for which a betting type is fixed, only a subject of a bet may be copied. The option information transmitted from the server 20 to the terminal 10a is information related to options that allow a betting user who places a bet to select a user whose bet information is to be copied, among one or more users who already placed a bet.

The terminal 10a displays the bet screen, based on the received screen information (step S105). For example, a bet screen as shown in Figure 9A may be displayed. Here, the bet screen will be described by using Figure 9A.

Figure 9A shows an example of the bet screen. In the bet screen shown in Figure 9A, options for a betting type, input fields for subjects of a bet (horses on which a bet is placed), and an input field for a bet amount are displayed. In the present example, the input fields for subjects of a bet are displayed even in a state where a betting type is not selected. However, a configuration may be made such that the input fields for subjects of a bet are displayed after a betting type is selected. At the time, the number of input fields for subjects of a bet may be varied depending on the selected betting type. For example, when a user selects "win", a horse to be selected is only a first-place horse, and therefore fields for selecting second- and third-place horses need not be displayed.

The terminal 10a may receive the bet subject information 27 from the server 20 and display the bet subject information 27 in the bet screen. For example, a horse name of each horse, a jockey riding on each horse, a gender of each horse, an age of each horse, and the like may be displayed based on the bet subject information 27.

Moreover, the terminal 10a may receive the bet subject information 27 from the server 20 and display the bet subject information 27 in the bet screen. For example, the number of bettors on each horse and information for identifying a horse on which another user places a bet may be displayed based on the bet information 26.

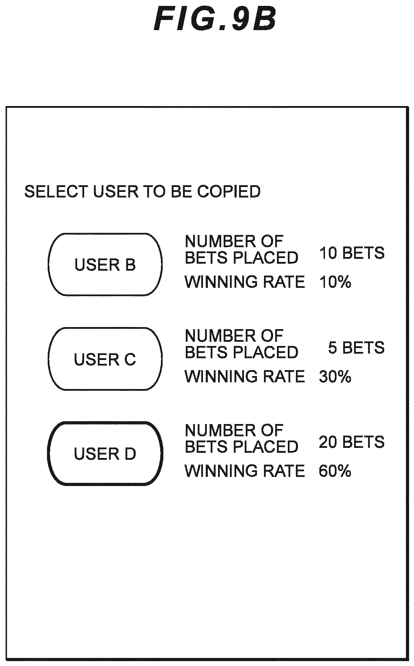

When an option of "copy bet of another user" displayed in the bet screen shown in Figure 9A is selected, the terminal 10a displays a user selection screen as shown in Figure 9B, based on the received option information (step S106). The user selection screen shown in Figure 9B includes options "user B", "user C", and "user D".

Moreover, in the user selection screen shown in Figure 9B, user information on each user is displayed along with each user option. In the present example, the "number of bets placed" by and a "winning rate" of each user are displayed. Not only the user information, bet information (a betting type, a subject of a bet, a bet amount, and the like) of each user displayed as an option may also be displayed in the user selection screen.

Moreover, a user displayed as an option in the user selection screen may be determined based on a predetermined rule. Hereinafter, specific examples of the predetermined rule will be described.

For example, a user displayed as an option may be a user located within a predetermined distance from a position where the user A is present, or may be a predetermined number of users, among a plurality of users, in order of closeness to the position of the user A. Order in which users displayed in the user selection screen are arranged may be the order of closeness to the position of the user A. At the time, distances between the users may be determined based on position information on a terminal used by each user. For example, the second communication section 21 of the server 20 may receive the terminal position information from the terminal 10a and a plurality of terminals other than the terminal 10a. At the time, the server 20 may include a determination section that determines, based on the received position information, whether or not the terminals other than the terminal 10a are located within the predetermined distance from the terminal 10a, and the terminal 10a may receive a result of the determination made by the determination section and display, as an option, a user of each terminal located within the predetermined distance from the terminal 10a.

A user displayed as an option in the user selection screen may be a user whose winning rate of past bets is equal to or greater than a predetermined value. For example, the server 20 may further include a determination section that determines, based on the user information 28, whether or not a winning rate of each user is equal to or greater than the predetermined value, and the terminal 10a may receive a result of the determination made by the determination section and display, as an option, each user whose winning rate is equal to or larger than the predetermined value.

A user displayed as an option in the user selection screen may be a user who has a property identical to a property indicating a trend of past bets of the user A. Specifically, a user displayed as an option in the user selection screen may be a user whose bet information is similar to that of the user A, and may be, for example, a user whose past bets were placed on horses that match those of the user A at a predetermined rate or greater, or the like. At the time, the server 20 may further include a determination section that determines, based on the bet information 26, whether or not a property indicating a trend of bets of each user is identical to the property indicating the trend of bets of the user A, and the terminal 10a may receive a result of the determination made by the determination section and display, as an option, each user who has the identical property.

A user displayed as an option in the user selection screen may be a user marked with a predetermined flag. For example, a user who is a celebrity or a famous person is marked with a flag in the user information table 28A, and each user marked with the flag may be displayed as an option. At the time, the server 20 may further include a determination section that determines, based on the user information 28, whether or not each user is marked with the flag, and the terminal 10a may receive a result of the determination made by the determination section and display, as an option, each user marked with the flag.

Among the above-described predetermined rules for determining a user to be displayed as an option in the user selection screen, a plurality of rules may be combined. For example, a user displayed as an option in the user selection screen may be a user whose winning rate of past bets is equal to or greater than the predetermined value, and who has a property identical to the property indicating the trend of past bets of the user A. For example, a user displayed as an option in the user selection screen may be a user whose winning rate of past bets is equal to or greater than the predetermined value, and who is marked with the predetermined flag. A user displayed as an option in the user selection screen may be a user who has a property identical to the property indicating the trend of past bets of the user A, and who is marked with the predetermined flag.

Moreover, when there are a plurality of users who are determined based on one predetermined rule, another predetermined rule may be further used in combination. For example, when there are a plurality of users whose winning rate of past bets is equal to or greater than the predetermined value, a user displayed as an option in the user selection screen may be a user, among the plurality of users, who has a property identical to the property indicating the trend of past bets of the user A. For example, when there are a plurality of users whose winning rate of past bets is equal to or greater than the predetermined value, a user displayed as an option in the user selection screen may be a user, among the plurality of users, who is marked with the predetermined flag. When there are a plurality of users who have a property identical to the property indicating the trend of past bets of the user A, a user displayed as an option in the user selection screen may be a user, among the plurality of users, who is marked with the predetermined flag.

When the terminal 10a receives, from the user A, a selection of a user whose bet information is to be copied (step S107), the terminal 10a transmits information for identifying the selected user to the server 20 (step S108). The server 20 generates screen information including bet information of the selected user (step S109), and transmits the screen information to the terminal 10a (step S110). The terminal 10a updates the bet screen, based on the received bet information (step S111). Specifically, as shown in Figure 9C, the bet screen is displayed in which the bet information of the selected user is inputted. In the present example, the user A selects "user D" in the user selection screen shown in Figure 9B. Accordingly, the bet screen displayed after the user is selected is displayed in a state where the same bet information as the bet information of the user D is inputted. Specifically, the bet screen is displayed in a state where "trifecta" is inputted for the betting method, "No. 1" is inputted for the horse number of the first-place horse, "No. 2" is inputted for the horse number of the second-place horse, "No. 3" is inputted for the horse number of the third-place horse, and "400 yen" is inputted for the bet amount.

The terminal 10a receives an instruction to execute the bet from the user A (step S112). The user A can input the instruction to execute the bet by selecting an option of "enter" displayed in the bet screen after confirming a content of the bet inputted.

Thereafter, the terminal 10a transmits the bet information on the bet placed by the user A to the server 20 (step S113). The server 20 stores the received bet information in the storage section 25 (step S114). Specifically, a corresponding record in the bet information table 26A is updated.

According to the present embodiment, bet information of another user is automatically inputted in a bet screen of a betting user. Accordingly, even a user less experienced in betting can easily place a bet. Moreover, information on each user displayed as an option, such as the number of bets placed in the past and a winning rate, is displayed in the user selection screen. Accordingly, a user with a high winning rate or an experienced user who placed a large number of bets can be selected, and even if a betting user is a beginner, the betting user can achieve a winning rate almost equivalent to a level of a veteran user.

Further, information on a subject of a bet, such as a horse name of a horse, a jockey riding on the horse, a gender of the horse, and an age of the horse, is displayed in the bet screen, whereby a betting user can determine a subject of a bet while looking at the displayed information for reference.

According to the present embodiment, since a user can copy bet information of another user, the user does not need to refer to information (a state of a horse, odds of each subject of a bet, and the like) that is thought to be normally checked by a user when the user him/herself determines a subject of a bet. Thus, communication volumes between the terminals 10 and the server 20 can be reduced.

Although a configuration is made in the above-described example such that after information for identifying a user whose bet information is to be copied is transmitted to the server 20, the server 20 extracts the bet information of the identified user from the storage section 25, the terminal 10a may have the bet information. In such a case, the terminal 10a may transmit at least part of the bet information of the user whose bet information is to be copied to the server.

Although a configuration is made in the above-described example such that a bet screen is automatically generated in which the same bet information as the bet information of the user D selected by the user A is inputted, a configuration may be made such that the bet information of the user D is displayed on the terminal 10a of the user A, and the user A him/herself inputs bet information while looking at the displayed bet information of the user D for reference.

Although a configuration is made in the above-described example such that the button for copying a bet of another user is prepared in the bet screen, and the user selection screen is displayed when the button is pressed down, such a configuration does not impose limitation. For example, a configuration may be made such that a button or the like for selecting bet information of another user who already placed a bet, or a user whose bet information is to be copied, is to be displayed in a home screen or a screen of an SNS (Social Network Service). In such a case, the server 20 may be configured to generate screen information including information for displaying a predetermined screen (a bet screen, a home screen, a scree of an SNS, or the like), and to transmit the screen information to the terminal 10a.

The above-described embodiment is intended to facilitate understanding of the present invention, and is not to interpret the present invention in a limiting manner. Each element included in the embodiment, and arrangement, material, conditions, shapes, sizes, and the like of the elements are not limited to those illustrated and can be changed as appropriate. Components in different embodiments can be partially exchanged or combined.

## Claims

1. An information processing apparatus comprising:
a transmission section that transmits screen information for displaying a predetermined screen to a terminal; and
a reception section that receives information inputted by a first user from the terminal, and executes a bet of the first user based on the received information,
wherein the screen information includes information related to one or more second users who already placed a bet, and
the reception section receives information for identifying at least one second user selected by the first user, or at least part of bet information of the selected at least one second user, and executes the bet of the first user based on the received information.

2. The information processing apparatus according to claim 1, wherein the bet information of the second user selected by the first user includes at least any one of a betting type and a subject of the bet.

3. The information processing apparatus according to claim 1 or 2, wherein the predetermined screen includes the number of bets placed by, or a winning rate of, each of the one or more second users.

4. The information processing apparatus according to any one of claims 1 to 3, wherein the predetermined screen includes information related to a subject of the bet.

5. The information processing apparatus according to any one of claims 1 to 4, wherein the transmission section transmits, to the terminal, the screen information including option-related information for allowing the at least one second user of the one or more second users to be selected.

6. The information processing apparatus according to claim 5, wherein the one or more second users each included as an option in the option-related information are one or more second users who are located within a predetermined distance from a position where the first user is present.

7. The information processing apparatus according to claim 5 or 6, wherein the one or more second users each included as an option in the option-related information are one or more second users who have teamed up with the first user a predetermined number of times or more.

8. The information processing apparatus according to any one of claims 5 to 7, wherein the one or more second users each included as an option in the option-related information are one or more second users who have performed transmission and reception of a message to/from the first user a predetermined number of times or more.

9. The information processing apparatus according to any one of claims 5 to 8, wherein the one or more second users each included as an option in the option-related information are one or more second users whose winning rate is equal to or greater than a predetermined value.

10. The information processing apparatus according to any one of claims 5 to 9, wherein the one or more second users each included as an option in the option-related information are one or more second users who have a property identical to a property indicating a trend of past bets of the first user.

11. The information processing apparatus according to any one of claims 5 to 10, wherein the one or more second users each included as an option in the option-related information are one or more second users marked with a predetermined flag.

12. The information processing apparatus according to any one of claims 1 to 11, wherein the predetermined screen is a bet screen that receives input of bet information related to a bet.

13. A bet acceptance method comprising:
by a computer,
transmitting screen information for displaying a predetermined screen to a terminal; and
receiving information inputted by a first user from the terminal, and executing a bet of the first user based on the received information,
wherein the screen information includes information related to one or more second users who already placed a bet, and
in executing the bet, information for identifying at least one second user selected by the first user, or at least part of bet information of the selected at least one second user is received, and the bet of the first user is executed based on the received information.

14. A program causing a computer to function as:
means for transmitting screen information for displaying a predetermined screen to a terminal; and
means for receiving information inputted by a first user from the terminal, and executing a bet of the first user based on the received information,
wherein the screen information includes information related to one or more second users who already placed a bet, and
the means for executing a bet is means for receiving information for identifying at least one second user selected by the first user, or at least part of bet information of the selected at least one second user, and executing the bet of the first user based on the received information.
